# EUROPEAN PATENT APPLICATION

(11) **EP 3 217 673 A1**
(43) Date of publication of application: **13.09.2017**
(21) Application number: 15857680.1
(22) Date of filing: 29.10.2015
(51) Int. Cl.: H04N 21/236, H04H 20/28, H04H 20/93, H04H 60/37, H04H 60/82, H04N 21/438

(54) **SENDING DEVICE, SENDING METHOD, RECEIVING DEVICE, AND RECEIVING METHOD**

(30) Priority: 05.11.2014 JP 2014225484
(71) Applicant: Sony Corporation, Tokyo 108-0075 (JP)
(72) Inventor: KITAZATO, Naohisa, Tokyo 108-0075 (JP); YAMAGISHI, Yasuaki, Tokyo 108-0075 (JP); KITAHARA, Jun, Tokyo 108-0075 (JP)
(74) Representative: Witte, Weller & Partner Patentanwälte mbB
(86) International application number: PCT/JP2015/080526
(87) International publication number: WO 2016/072343

(57) **Abstract**

Hybrid broadcasting and communication services are made excellently implementable.

A transport stream obtained by time-division multiplexing a first transmission packet including a predetermined component and a second transmission packet including information on the predetermined component is generated. The transport stream is transmitted along a predetermined transmission path. Acquisition information of a component on a communication path, the acquisition information including at least location information and protocol identification information, is inserted into the second transmission packet. A receiving side can excellently receive the transport stream including the transmission packet having the component on the communication path on the basis of the acquisition information. For example, the acquisition information further includes packet identification information. Inthiscase, even if a plurality of transmission packets is multiplexed into the transport stream, a desired transmission packet can be selectively acquired on the basis of the packet identification information.

## Description

### TECHNICAL FIELD

The present technology relates to a transmission apparatus, a transmission method, a receiving apparatus, and a receiving method, and specifically relates to, for example, a transmission apparatus suitable to be applied to a hybrid broadcasting and communication system.

### BACKGROUND ART

In the current broadcasting system, the moving picture experts group-2 transport stream (MPEG-2 TS) format and the real time protocol (RTP) format are widely used as media transport formats (for example, see Patent Document 1). The MPEGmediatransport (MMT) format (see, for example, Non-Patent Document 1) is under discussion as a next-generation digital broadcasting format.

### CITATION LIST

### PATENT DOCUMENT

Patent Document 1: Japanese Patent Application Laid-Open No. 2013-153291

### NON-PATENT DOCUMENT

Non-Patent Document 1: ISO/IEC DIS 23008-1:2013(E) Information technology-High efficiency coding and media delivery in heterogeneous environments-Part1:MPEG media transport(MMT)

### SUMMARY OF THE INVENTION

### PROBLEMS TO BE SOLVED BY THE INVENTION

An object of the present technology is to make hybrid broadcasting and communication services excellently implementable.

### SOLUTIONS TO PROBLEMS

A concept of the present technology is a transmission apparatus including:
a transport stream generation unit configured to generate a transport stream obtained by time-division multiplexing a first transmission packet including a predetermined component and a second transmission packet including information on the predetermined component;
a transmission unit configured to transmit the transport stream along a predetermined transmission path; and
an information insertion unit configured to insert, into the second transmission packet, acquisition information of a component on a communication path, the acquisition information including at least location information and protocol identification information.

In the present technology, the transport stream generation unit generates the transport stream obtained by time-division multiplexing the first transmission packet including the predetermined component and the second transmission packet including the information on the predetermined component. For example, the transmission packet may be configured to be an MPEG media transport (MMT) packet. The transmission unit transmits the transport stream to a receiving side along the predetermined transmission path. For example, the predetermined transmission path may be configured to be a broadcast transmission path.

The information insertion unit inserts, into the second transmission packet, the acquisition information of the component of the communication path, the acquisition information including at least the location information and the protocol identification information. For example, the protocol identification information may be configured to be information for identifying a protocol of at least any of multicast distribution, MMTP/UDP distribution, MMTP/TCP distribution, MMTP/HTTP distribution, and MPU/HTTP distribution.

In this case, when, for example, the protocol identification information indicates the MMTP/UDP distribution, the acquisition information may be configured to include a parameter that specifies UDP in addition to a URL. Moreover, in this case, when, for example, the protocol identification information indicates the MMTP/TCP distribution, the acquisition information may be configured to include a parameter that specifies TCP in addition to a URL.

In this manner, in the present technology, the acquisition information of the component on the communication path, the acquisition information including at least the location information and the protocol identification information, is inserted into the second transmission packet. Hence, the receiving side can excellently receive the transport stream including the transmission packet having the component on the communication path on the basis of the acquisition information.

Incidentally, in the present technology, for example, the acquisition information may be configured further including packet identification information. In this case, even if a plurality of transmission packets of components is multiplexed into the transport stream, a transmission packet of a desired component can be selectively acquired on the basis of the packet identification information.

Moreover, another concept of the present technology is a receiving apparatus including:
a receiving unit configured to receive, along a predetermined transmission path, a transport stream obtained by time-division multiplexing a first transmission packet including a predetermined component and a second transmission packet including information on the predetermined component,
the second transmission packet including inserted acquisition information of a component on a communication path, the acquisition information including at least location information and protocol identification information; and
a communication unit configured to receive a transport stream including a third transmission packet having a predetermined component via a network through a protocol indicated by the protocol identification information on the basis of the location information and the protocol identification information.

In the present technology, the receiving unit receives, along the predetermined transmission path, the transport stream obtained by time-division multiplexing the first transmission packet including the predetermined component and the second transmission packet including the information on the predetermined component. The acquisition information of the component on the communication path, the acquisition information including at least the location information and the protocol identification information, is inserted into the second transmission packet.

The communication unit makes a request to a server on the basis of the location information and the protocol identification information to receive the transport stream including the third transmission packet having the predetermined component from the server via the network through the protocol indicated by the protocol identification information. For example, the protocol identification information may be configured tobe information for identifying a protocol of at least any of multicast distribution, MMTP/UDP distribution, MMTP/TCPdistribution, MMTP/HTTPdistribution, and MPU/HTTP distribution.

When, for example, the protocol identification information indicates the MMTP/UDP distribution, the acquisition information may be configured to include a parameter that specifies UDP in addition to a URL. The communication unit may be configured to make a request to the server using the URL and the parameter that specifies UDP to receive the transport stream including the third transmission packet from the server via the network through the protocol of the MMTP/UDP distribution.

Moreover, when, for example, the protocol identification information indicates the MMTP/TCP distribution, the acquisition information may be configured to include a parameter that specifies TCP in addition to a URL. The communication unit may be configured to make a request to the server using the URL and the parameter that specifies TCP to receive the transport stream including the third transmission packet corresponding to the parameter from the server via the network through the protocol of the MMTP/TCP distribution.

Moreover, when, for example, the protocol identification information indicates the MMTP/HTTP distribution, the acquisition information may be configured to include a URL. The communication unit may be configured to sequentially transmit requests to the server using the URL and a parameter indicating an MPU sequence number to sequentially receive MMT packets including an MPU of an MPU sequence number corresponding to the parameter from the server via the network. The parameter indicating an MPU sequence number in the first request may be configured to be assumed to represent an MPU sequence number at a timing of the first request.

Moreover, when, for example, the protocol identification information indicates the MPU/HTTP distribution, the acquisition information may be configured to include a URL. The communication unit may be configured to sequentially transmit requests to the server using the URL and the parameter indicating an MPU sequence number to sequentially receive MPUs with MPU sequence number corresponding to the parameter from the server via the network. The parameter indicating an MPU sequence number in the first request may be configured to be assumed to represent an MPU sequence number at a timing of the first request.

In this manner, in the present technology, a request is made to the server on the basis of the location information and the protocol identification information, which have been transmitted, inserted in the second transmission packet, to receive the transport stream including the third transmission packet having the predetermined component from the server via the network through the protocol indicated by the protocol identification information. Hence, a transport stream including a transmission packet having a component on a communication path can be excellently received.

Moreover, in the present technology, for example, the acquisition information of the component on the communication path may be configured further including the packet identification information. The communication unit may be configured to extract the third transmission packet from the received transport stream including the third transmission packet on the basis of the packet identification information. In this case, even if a plurality of transmission packets of components is multiplexed into the transport stream, a transmission packet of a desired component can be selectively acquired on the basis of the packet identification information.

Furthermore, still another concept of the present technology is a receiving apparatus including:
a receiving unit configured to receive, along a predetermined transmission path, a transport stream obtained by time-division multiplexing a first transmission packet including a predetermined component and a second transmission packet including information on the predetermined component,
the second transmission packet including inserted acquisition information of a component on a communication path, the acquisition information including at least location information and protocol identification information; and
a processing unit configured to process the transport stream received by the receiving unit.

### EFFECTS OF THE INVENTION

According to the present technology, hybrid broadcasting and communication services can be excellently implemented. Incidentally, the effects described in the description are merely illustrated by example, and are not intended to be restricted. Moreover, there may be additional effects.

### BRIEF DESCRIPTION OF DRAWINGS

Fig. 1 is a block diagram illustrating a configuration example of a hybrid broadcasting and communication system as an embodiment.
Fig. 2 is a diagram illustrating a stack model of a signal configuration example of MMT/broadcasting.
Figs. 3(a) to 3(e) are diagrams illustrating configuration examples of a broadcast stream in MMT format.
Fig. 4 is a diagram illustrating an image of a broadcast signal of one channel (broadcast program) to be transmitted from a broadcast transmission system to a receiving terminal.
Figs. 5(a) and 5(b) are diagrams illustrating a configuration example of an MMT packet and a configuration example of an MMTP payload (MMTP payload).
Fig. 6 is a diagram illustrating a stack model of a signal configuration example of MMT/communication.
Fig. 7 is a diagram schematically illustrating configuration examples of a package access message (PAmessage) and an MMT package table (MP table: MPT).
Fig. 8 is a diagram illustrating descriptions of main parameters of the PA message.
Fig. 9 is a diagram illustrating descriptions of main parameters of the MP table.
Fig. 10 is a diagram illustrating a structural example (syntax) of the PA message.
Fig. 11 is a diagram illustrating a structural example (syntax) of the MP table (MPT).
Fig. 12 is a diagram illustrating part of a structural example (syntax) of "MMT_general_location_info()."
Fig. 13 is a diagram for describing a receive sequence in a case of receiving an asset distributed through a protocol of (A) multicast distribution.
Fig. 14 is a diagram for describing a receive sequence in a case of receiving an asset distributed through a protocol of (B) MMTP/UDP distribution.
Fig. 15 is a diagram for describing a receive sequence in a case of receiving an asset distributed through a protocol of (C) MMTP/TCP distribution.
Fig. 16 is a diagram for describing a receive sequence in a case of receiving an asset distributed through a protocol of (D) MMTP/HTTP distribution.
Fig. 17 is a diagram for describing a cutting process in a multiplexed stream of MMTP/HTTP.
Fig. 18 is a diagram for describing a receive sequence in a case of receiving an asset distributed through a protocol of (E) MPU/HTTP distribution.
Fig. 19 is a block diagram illustrating a configuration example of a broadcast transmission system.
Fig. 20 is a block diagram illustrating a configuration example of a receiving terminal.

### MODE FOR CARRYING OUT THE INVENTION

A mode for carrying out the invention (hereinafter referred to as the "embodiment") is described hereinafter. Incidentally, descriptions are given in the following order:

### 1. Embodiment

### 2. Modifications

### <1. Embodiment)

### [Configuration Example of a Hybrid Broadcasting and Communication System]

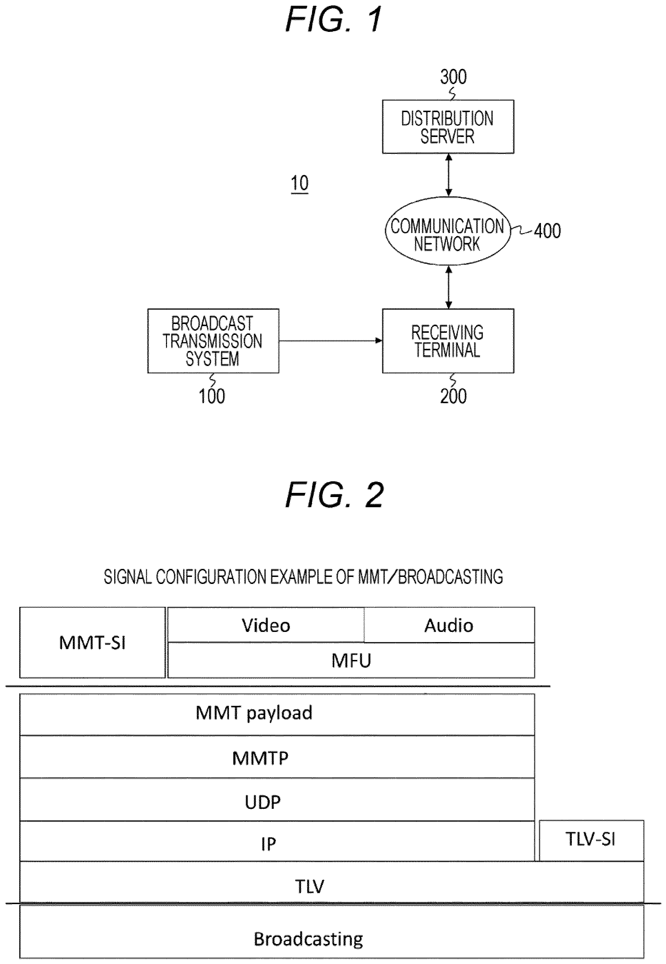

Fig. 1 illustrates a configuration example of a hybrid broadcasting and communication system 10. In the hybrid broadcasting and communication system 10, a broadcast transmission system 100 and a distribution server 300 are placed on a transmission side, and a receiving terminal 200 is placed on a receiving side. The distribution server 300 is connected to the receiving terminal 200 via a communication network 400.

The broadcast transmission system 100 transmits a broadcast signal in Internet protocol (IP) format including, for example, a video or audio component (asset) as transmission media. The distribution server 300 distributes a transport stream where IP packets including, for example, video and audio components (assets) as transmission media are continuously placed to the receiving side via the communication network 400, for example, at the request of the receiving side.

The receiving terminal 200 receives a broadcast signal in IP format transmitted from the broadcast transmission system 100, and also receives, from the distribution server 300, a transport stream where IP packets are continuously placed. The receiving terminal 200 acquires transmission media (component) such as video or audio that should be presented, from the received signal in such hybrid broadcasting and communication transmission, and presents an image, sound, or the like.

Acquisition information of a component on a communication path is inserted in the broadcast signal in IP format. The acquisition information includes at least location information and protocol identification information. The receiving terminal 200 requests the distribution server 300 on the basis of the acquisition information, and receives the distribution of the transport stream through a protocol indicated by the protocol identification information.

Fig. 2 illustrates a stack model of a signal configuration example of MMT/broadcasting. A type length value (TLV) transmission packet is present in a lower layer. An IP packet is on the TLV transmission packet. Incidentally, there is also a TLV transmission packet on which a transmission control signal is placed as signaling (signaling) information.

The user datagram protocol (UDP) is on the IP packet. An MPEG media transport (MMT) packet is then on UDP. A payload portion of the MMT packet includes an MMT fragment unit (MFU) including encoded data of, for example, video or audio component, or a signaling message (signaling message) including information on the transmission media.

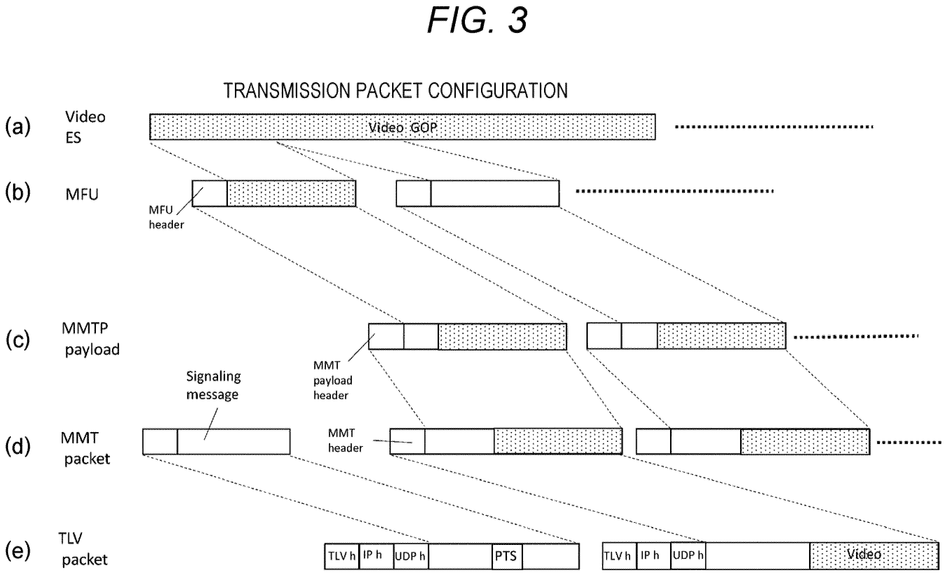

Figs. 3(a) to 3(e) illustrate configuration examples of a broadcast stream in MMT format. Fig. 3(a) illustrates a video elementary stream (video ES). The video elementary stream is divided into blocks of a predetermined size, and is placed in a payload portion of the MFU as illustrated in Fig. 3(b).

As illustrated in Fig. 3(c), an MMT payload header (MMT payload header) is added to the MFU to configure an MMTP payload (MMTP payload). As illustrated in Fig. 3(d), an MMT header (MMT header) is then further added to the MMTP payload to configure an MMT packet (MMT packet). Incidentally, there is also an MMT packet including a signaling message (signaling message) in the payload portion. As illustrated in Fig. 3(e), a UDP header, an IP header, and a TLV header are added to the MMT packet to generate a TLV packet (TLV packet) configuring a broadcast stream in MMT format.

Incidentally, although the illustration is omitted, there is also a TLV packet including an MMT packet of another component such as audio, as the TLV packet. The broadcast stream in MMT format results in having a first packet (MMT packet) including transmission media (component), and a second packet (MMT packet) including signaling information.

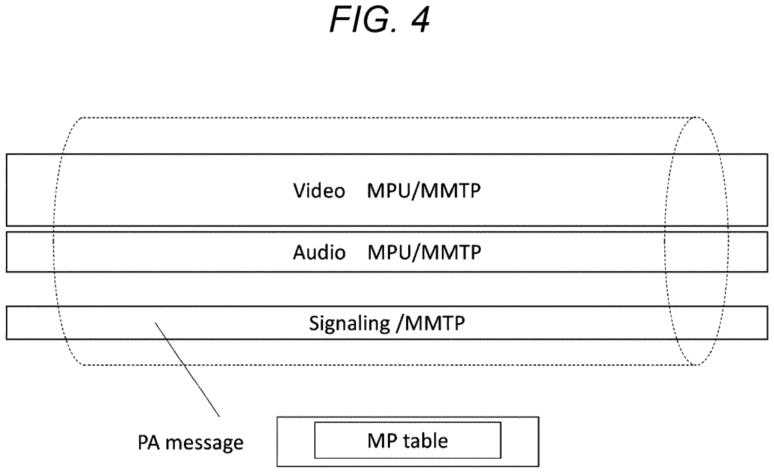

Fig. 4 illustrates an image of a broadcast signal of one channel (broadcast program) to be transmitted from the broadcast transmission system 100 to the receiving terminal 200. The broadcast signal also includes the MMT packet including the signaling message together with the MMT packets such as video and audio. There is a PA message (PA message) including, for example, an MP table (MP table), as the signaling message.

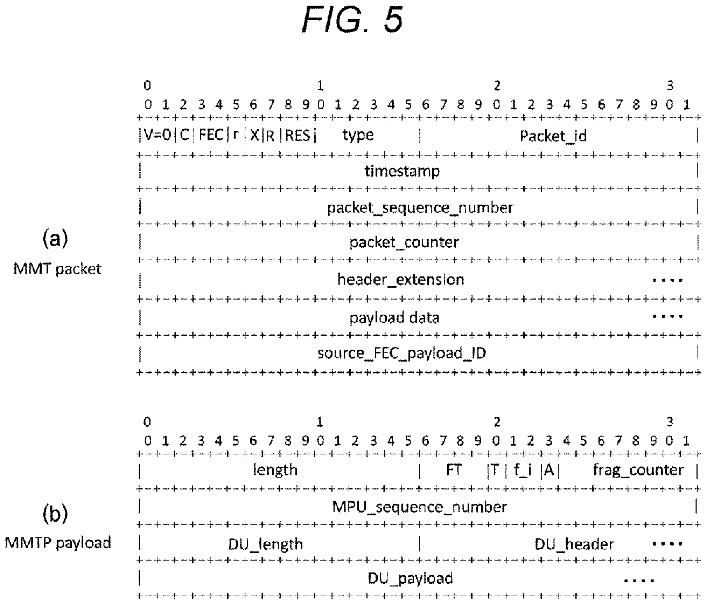

Fig. 5(a) illustrates a configuration example of the MMT packet. The MMT packet includes an MMT packet header (MMTP header) and an MMTP payload (MMTP payload). A two-bit field of "V" indicates the version of the MMT protocol. The field is set to "00" in the first version of the MMT standard. A one-bit field of "C" indicates packet counter flag (packet_counter_flag) information, and is set to "1" when a packet counter flag is present. A two-bit field of "FEC" indicates the FEC type (FEC_type).

A one-bit field of "X" indicates extension header flag (etension_flag) information, and is set to "1" when the header of the MMT packet is extended. In this case, a "header_extension" field described below is present. A one-bit fieldof "R" indicates RAP flag (RAP_flag) information, and is set to "1" when the MMT payload to be transmitted in the MMT packet includes the head of a random access point.

A six-bit field of "type" is payload type (payload_type) information, and indicates the data type of the MMTP payload. For example, "0×00" indicates that the payload is a media processing unit (MPU), and "0×02" indicates that the payload is a signaling message (signaling message).

A 16-bit field of "packet_id" indicates a packet identifier (packet_id) for identifying the data type of the payload. A 32-bit field of "timestamp" indicates a timestamp for transmission, that is, the time when the MMT packet is sent out from the transmission side. The time is represented in NTP short format (NTP short format). A 32-bit field of "packet_sequence_number" indicates the sequence number of an MMT packet with the same packet identifier (packet_id). A 32-bit field of "packet_counter" indicates the order of the MMT packet in the same IP data flow regardless of its packet identifier (packet_id) value.

When the above-mentioned one-bit flag information of "X" is "1", the "header_extension" field being an MMT extension header is placed after the 32-bit field of "packet_counter." After that, there are a "payload data" field and a "source_FEC_payload_ID" field, which configure the MMTP payload (MMTP payload).

Fig. 5(b) illustrates a configuration example (syntax) of the MMTP payload (MMTP payload) placed in the above-mentioned "payload data" field of the MMT packet. Incidentally, this example indicates a case of an MPU mode where "type" of the MMT header is "0×00." Firstly, there is header information. A 16-bit field of "length" indicates the byte size of the entire MMTP payload. A four-bit field of "FT" indicates a field type. "0" indicates the presence of "MPU metadata, " "1" indicates the presence of "Movie Fragment metadata," and "2" indicates the presence of "MFU."

Here, the MFU (MMT fragment unit) is obtained by fractionizing, that is, fragmenting (fragment) an MPU. In the case of, for example, video, the MFU can be set to correspond to one NAL unit. Moreover, in the case of, for example, transmission on a communication network transmission path, the MFU can also be configured in one or more MTU sizes (MTU size).

Moreover, the MPU starts with a random access point (random access point: RAP), and includes one or more access units (access units: AU). Specifically, for example, pictures of one group of pictures (GOP) may configure one MPU. The MPU is defined by asset (by component). Therefore, a video MPU including only video data is created from a video asset, and an audio MPU including only audio data is created from an audio asset.

One-bit flag information of "T" indicates whether to transmit timed media (timed media) or non-timed media (non-timed media). "1" indicates timed media, and "0" indicates non-timed media.

A two-bit field of "f_i" indicates whether or not a "DU payload" field includes an integer number of data units (data unit: DU), and includes which of the first (first), middle, and last (last) fragments (fragment) obtained by fragmenting a data unit. "0" indicates that the integer number of data units is included. "1" indicates that the first fragment is included. "2" indicates that the middle fragment is included. "3" indicates that the last fragment is included.

One-bit flag information of "A" indicates whether or not the "DU payload" field includes a plurality of data units. "1" indicates presence, and "0" indicates absence. An eight-bit field of "flag_counter" indicates the position of the fragment in sequence when "f_i" is 1 to 3.

A 32-bit field of "MPU_sequence_number" is the number indicating the order of the MPU, and is information for identifying the MPU. If, for example, one GOP configures one MPU, when "MPU_sequence_number" of a certain GOP is "i", "MPU_sequence_number" of the next GOP is "i + 1."

Fields of "DU_length," "DU_header," "DU_payload" are placed after the "MPU_sequence_number" field. The 16-bit field of "DU_length" is not present in the above-mentioned case of "A = 0," that is, if the "DU payload" field does not include a plurality of data units. Moreover, the "DU_header" field is not present if "FT = 0/1," that is, if "MPU metadata" and "Movie Fragment metadata" are included.

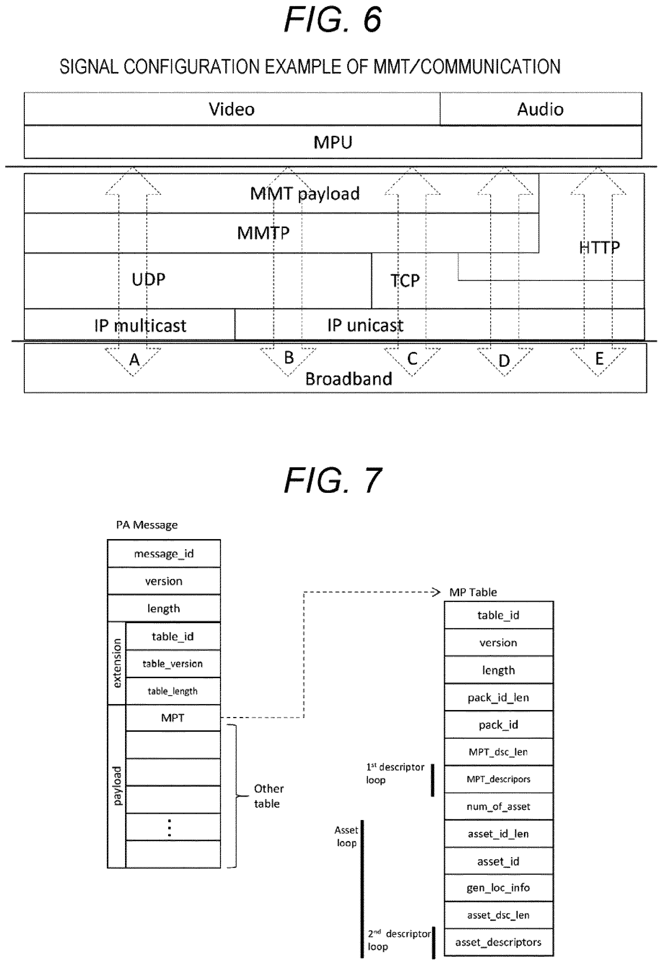

Fig. 6 illustrates a stack model of a signal configuration example of MMT/communication. (A) Multicast distribution, (B) MMTP/UDP distribution, (C) MMTP/TCP distribution, (D) MMTP/HTTP distribution, and (E) MPU/HTTP distribution are conceivable as distribution options in MMT/communication.

### "(A) Multicast distribution"

In the case of multicast distribution, an IP packet is present in a lower layer. The user datagram protocol (UDP) is on the IP packet. An MPEG media transport (MMT) packet is then on UDP. A payload portion of the MMT packet includes an MPU including encoded data of a component such as video or audio.

In the case of multicast distribution, it is the most desirable format for the hybridbroadcasting and communication use, considering a measure against congestion. Moreover, in the case of multicast distribution, transmission is efficient due to UDP transmission. However, there is a problem of packet loss. Accordingly, it may require application layer-forward error correction (AL-FEC).

Moreover, in the case of multicast distribution, only a receiving terminal connected directly to a managed network (managed network) can be used. Moreover, in the case of multicast distribution, there are a case where a multicast IP stream transmits an MMTP stream into which a plurality of assets (components) is multiplexed, and a case where a multicast IP stream transmits an MMTP stream including only a single asset.

"(B) MMTP/UDP distribution"

In the case of MMTP/UDP distribution, an IP packet is present in a lower layer. The user datagram protocol (UDP) is on the IP packet. An MMT packet is then on UDP. A payload portion of the MMT packet includes an MPU including encoded data of a component such as video or audio.

In the case of MMTP/UDP distribution, there is a problem of congestion in the hybrid broadcasting and communication use due to unicast (unicast). Moreover, in the case of MMTP/UDP distribution, transmission is efficient due to UDP transmission. However, it may require AL-FEC. Moreover, in the case of multicast distribution, the total delay and synchronization are better than TCP.

Moreover, in the case of MMTP/UDP distribution, it can be widely used in general Internet connection devices due to unicast but may not be usable by default depending on the router settings. In the case of MMTP/UDP distribution, there are a case where an IP stream transmits an MMTP stream into which a plurality of assets (components) is multiplexed, and a case where an IP stream transmits an MMTP stream including only a single asset.

### "(C) MMTP/TCP distribution"

In the case of MMTP/TCP distribution, an IP packet is present in a lower layer. The transmission control protocol (TCP) is on the IP packet. An MMT packet is then on TCP. A payload portion of the MMT packet includes an MPU including encoded data of a component such as video or audio.

In the case of MMTP/TCP distribution, it can be widely used in general Internet connection devices due to unicast. Moreover, in the case of MMTP/TCP distribution, there is a problem of congestion in the hybrid broadcasting and communication use due to unicast. Moreover, in the case of MMTP/TCP distribution, the efficiency is sacrificed due to TCP transmission, but retransmission is possible. Accordingly, AL-FEC is not required.

Moreover, in the case of MMTP/TCP distribution, there are a case where an IP stream transmits an MMTP stream into which a plurality of assets (components) is multiplexed, and a case where an IP stream transmits an MMTP stream including only a single asset.

### "(D) MMTP/HTTP distribution"

In the case of MMTP/HTTP distribution, an IP packet is present in a lower layer. TCP is on the IP packet. The hyper text transfer protocol (HTTP) is then on TCP. Furthermore, an MMT packet is on HTTP. A payload portion of the MMT packet includes an MPU including encoded data of a component such as video or audio.

In the case of MMTP/HTTP distribution, it can be widely used in general Internet connection devices due to HTTP. Moreover, in the case of MMTP/HTTP distribution, there is a problem of congestion in the hybrid broadcasting and communication use due to unicast. Moreover, in the case of MMTP/HTTP distribution, the efficiency is sacrificed due to TCP transmission, but retransmission is possible. Accordingly, AL-FEC is not required.

Moreover, in the case of MMTP/HTTP distribution, there are a case where an IP stream transmits an MMTP stream into which a plurality of assets (components) is multiplexed, and a case where an IP stream transmits an MMTP stream including only a single asset.

### "(E) MPU/HTTP distribution"

In the case of MPU/HTTP distribution, an IP packet is present in a lower layer. TCP is on the IP packet. HTTP is then on TCP. A payload portion of the HTTP packet includes an MPU including encoded data of a component such as video or audio.

In the case of MPU/HTTP distribution, it can be widely used in general Internet connection devices due to HTTP. Moreover, in the case of MPU/HTTP distribution, there is a problem of congestion in the hybrid broadcasting and communication use due to unicast. Moreover, in the case of MPU/HTTP distribution, the efficiency is sacrificed due to TCP transmission, but retransmission is possible. Accordingly, AL-FEC is not required.

Moreover, in the case of MPU/HTTP distribution, an MMT packet is not interposed. Accordingly, the transmission efficiency is increased as compared to MMTP/HTTP distribution. Conversely, there is an issue that information of an MMTP header and the like is lost. Moreover, in the case of MPU/HTTP distribution, HTTP allows a receiving terminal to acquire each individual MPU file of a single asset (component).

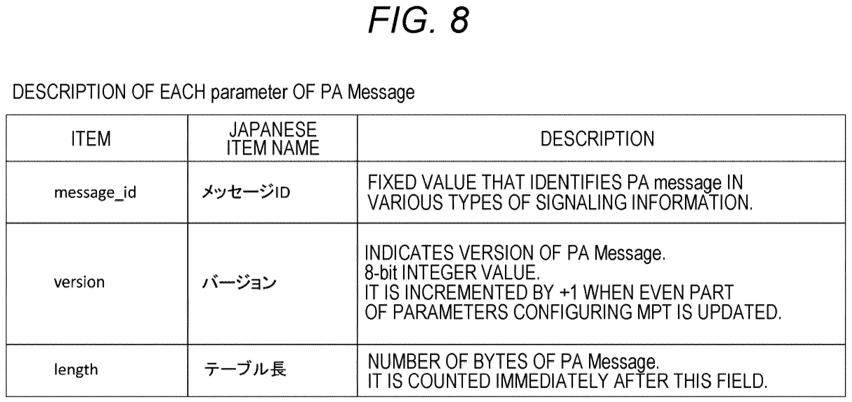

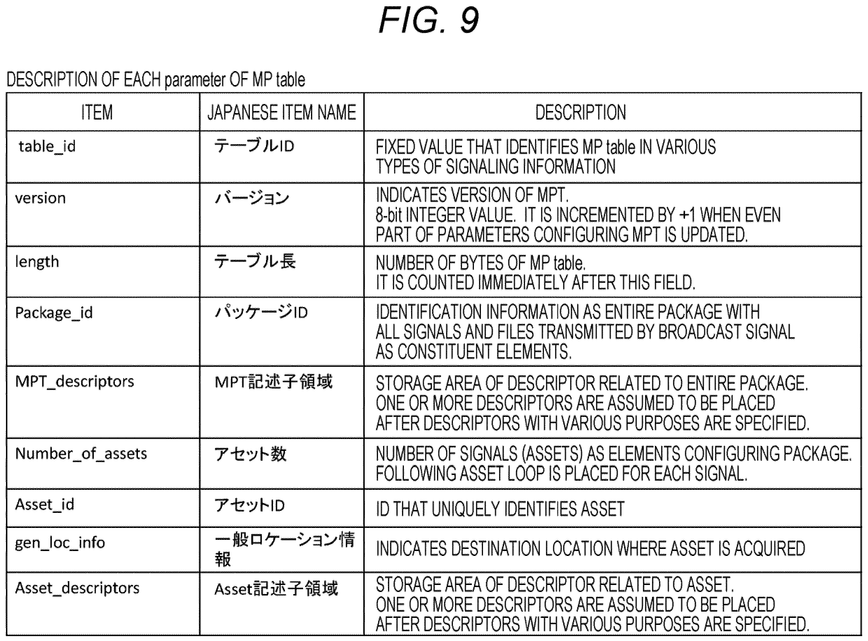

Fig. 7 schematically illustrates structures of a package access message (PA message) and an MMT package table (MP table: MPT). Moreover, Fig. 8 illustrates descriptions of main parameters of the PAmessage. Fig. 9 illustrates descriptions of main parameters of the MP table.

"message_id" is a fixed value that identifies the PA message in various types of signaling information. "version" is an eight-bit integer value indicating the version of the PA message. It is incremented by +1 if, for example, even a part of parameters configuring the MP table is updated. "length" is the number of bytes indicating the size of the PA message, which is counted immediately after this field.

Index information of a table placed in a payload (payload) field is placed in an "extension" field. "table_id," "tatble_version," and "table_length" fields are placed for each table in this field. "table_id" is a fixed value for identifying the table. "table_version" indicates the version of the table. "table_length" is the number of bytes indicating the size of the table.

An MP table (MPT) and a predetermined number of other tables (other table) are placed in the payload (payload) field of the PA message. The configuration of the MP table is descried below.

"table_id" is a fixed value for identifying the MP table in various types of signaling information. "version" is an eight-bit integer value indicating the version of the MP table. It is incrementedby+1 if, for example, even apart of parameters configuring the MP table is updated. "length" is the number of bytes indicating the size of the MP table, which is counted immediately after this field.

"pack_id" is identification information as an entire package having all assets (components) to be transmitted in broadcasting and communication as constituent elements. The identification information is text information. "pack_id_len" indicates the size (the number of bytes) of the text information. An "MPT_descriptors" field is a storage area of a descriptor related to the entire package. "MPT_dsc_len" indicates the size (the number of bytes) of the field.

"num_of_asset" indicates the number of assets (components) as elements configuring the package. The following asset loop is placed for each asset. "asset_id" is unique identification information of an asset (an asset ID). The identification information is text information. "asset_id_len" indicates the size (the number of bytes) of the text information. "gen_loc_info" is information indicating a destination location where an asset is acquired. An "asset_descriptors" field is a storage area of a descriptor related to the asset. "asset_dsc_len" indicates the size (the number of bytes) of the field.

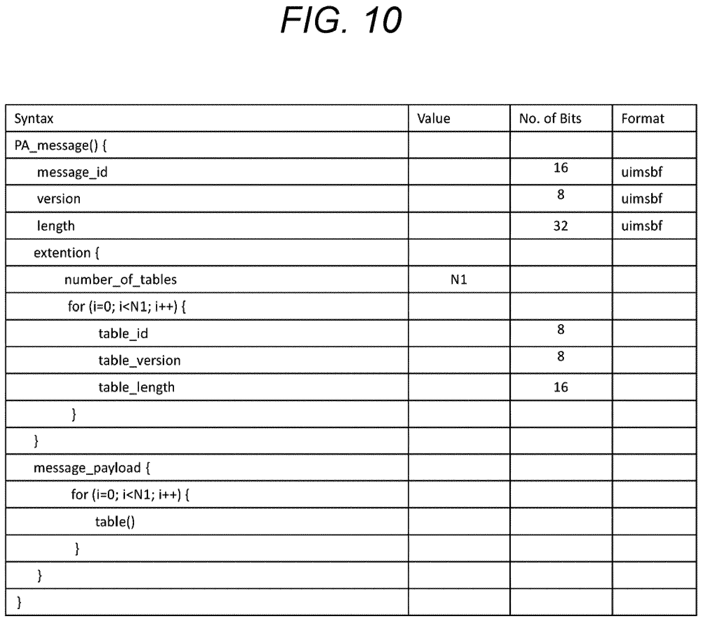

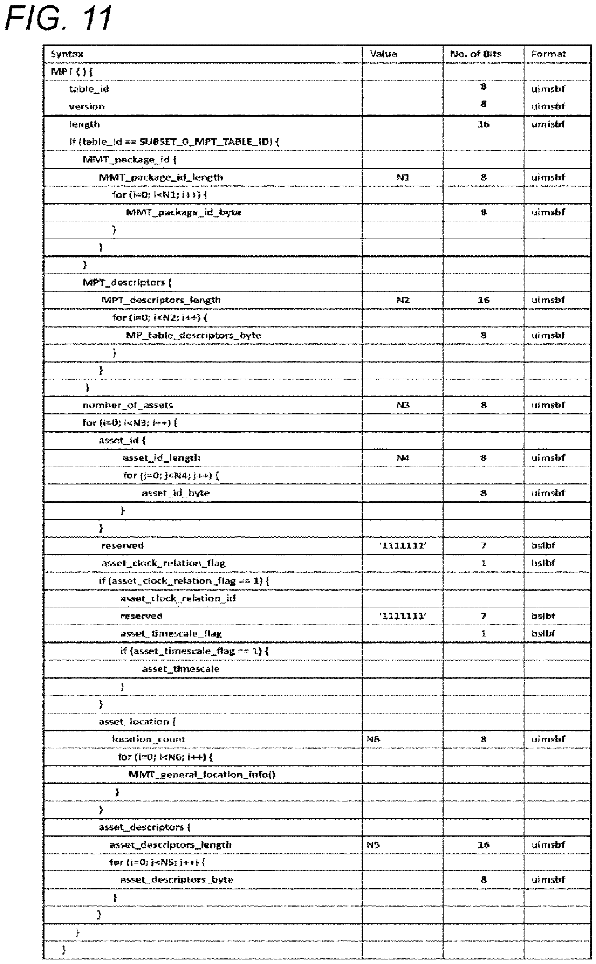

Incidentally, Fig. 10 illustrates a structural example (syntax) of the above-mentioned PA message. Moreover, Fig. 11 illustrates a structural example (syntax) of the above-mentioned MP table (MPT). The "gen_loc_info" field in Fig. 7 corresponds an "asset_location" field in Fig. 11, in which a plurality of "MMT_general_location_info()" can be placed as information indicating a destination location where the asset is acquired. Moreover, the "asset_descriptors" field in Fig. 7 corresponds to an "asset_descriptors" field in Fig. 11.

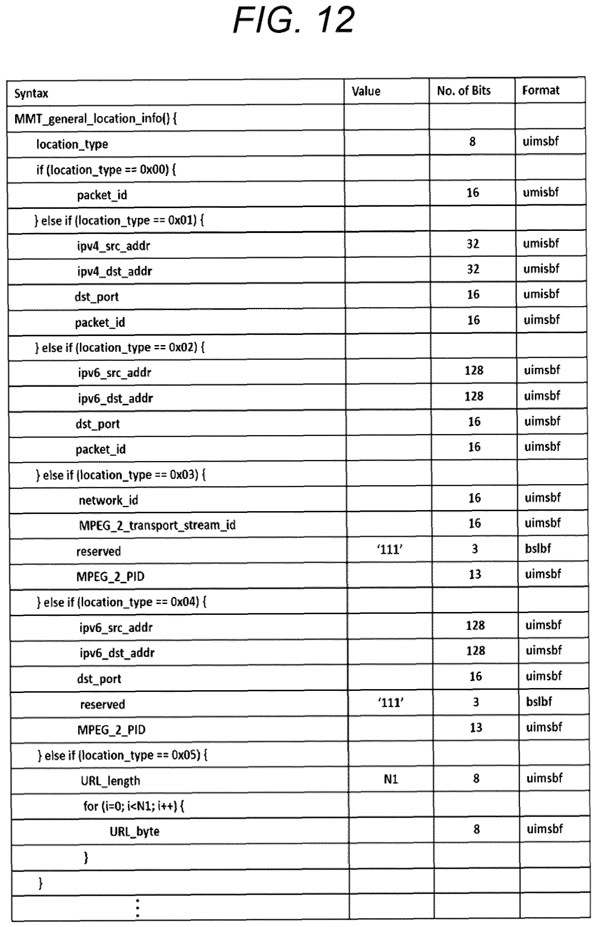

Fig. 12 illustrates part of a structural example (syntax) of "MMT_general_location_info()." An eight-bit field of "location_type" indicates the type of information indicating a destination location where the asset is acquired (hereinafter referred to as the "location information" as appropriate). In the case of an asset to be distributed through the protocol of the above-mentioned (A) multicast distribution, "location_type" is "0×01" or "0×02." A source address (ipv4_src_addr, ipv6_src_addr), a destination address (ipv4_dst_addr, ipv6_dst_addr), a destination port number (dst_port), and a packet identifier (packet_id) are inserted as the location information. In this case, it is identified as multicast distribution from "location_type."

Moreover, in the case of an asset to be distributed through the protocol of the above-mentioned (B) MMTP/UDP distribution, (C) MMTP/TCP distribution, (D) MMTP/HTTP distribution, or (E) MPU/HTTP distribution, "location_type" is set to "0×05." A uniform resource locator (URL) is placed as the location information.

Here, in the case of the asset to be distributed through the protocol of (B) MMTP/UDP distribution, "rtsp:// ∼.mmt" is specified as a schema (schema). Furthermore, a parameter that specifies UDP and a parameter that specifies a packet identifier (packet_id) are added by a query field (query field) . In the end, the URL in this case is represented as in "rtsp: // ∼.mmt?pr=udp&pid=1." In this case, it is identified as MMTP/UDP distribution from "rtsp" and "pr=udp."

Moreover, in the case of the asset to be distributed through the protocol of (C) MMTP/TCP distribution, "rtsp:// ∼.mmt" is specified as a schema (schema). Furthermore, a parameter that specifies TCP and a parameter that specifies a packet identifier (packet_id) are added by a query field (query field) . In the end, the URL in this case is represented as in "rtsp:// ∼.mmt?pr=udp&pid=1." In this case, it is identified as MMTP/TCP distribution from "rtsp" and "pr=tcp. "

Moreover, in the case of the asset to be distributed through the protocol of (D) MMTP/HTTP distribution, "http:// ∼.mmt" is specified as a schema (schema). Furthermore, a parameter that specifies a packet identifier (packet_id) is added by a query field (query field). In the end, the URL in this case is represented as in "http:// ∼.mmt?pr=pit=1." In this case, it is identified as MMTP/HTTP distribution from "http" and "mmt."

Moreover, in the case of the asset to be distributed through the protocol of (E) MPU/HTTP distribution, "http:// ∼.mp4" is specified as a schema (schema). In other words, the URL in this case is represented as in "http:// ∼.mp4." In this case, it is identified as MPU/HTTP distribution from "http" and "mp4."

### "Receive Sequence"

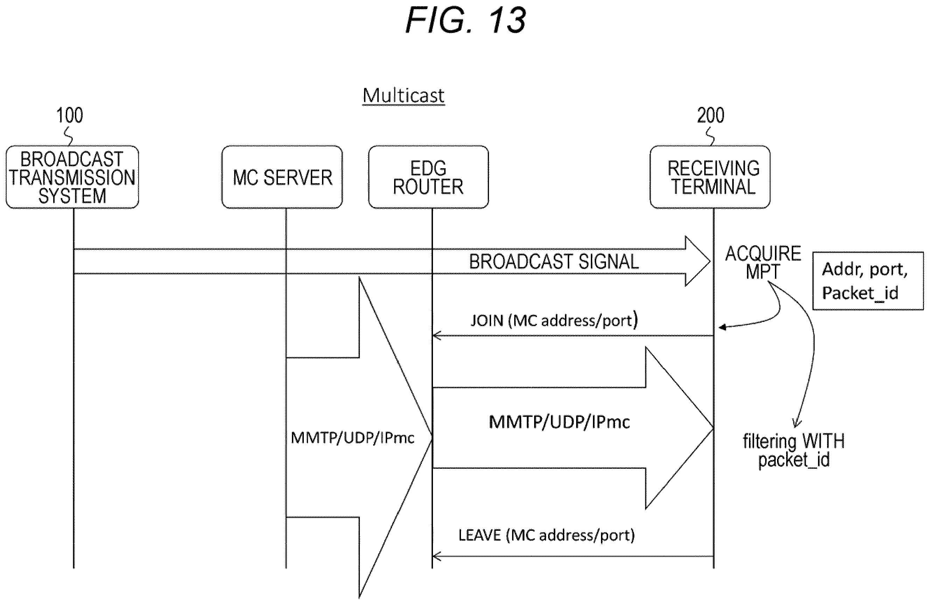

Next, a receive sequence in the receiving terminal 200 is described. Firstly, a case of receiving an asset distributed through the protocol of (A) multicast distribution is described with reference to Fig. 13. In the case of multicast distribution, a multicast serer (MC server) is present.

The receiving terminal 200 receives a broadcast signal, and acquires an MP table (MPT). The receiving terminal 200 obtains, from the MP table, location information of the asset distributed through the protocol of multicast distribution. The location information in this case includes a source address, a destination address, a destination port number, and a packet identifier. In this case, the receiving terminal 200 can identify it as multicast distribution from the location type.

In this case, the receiving terminal 200 transmits, to an edge router, a join message (JOIN message) to which the multicast address and the port number, which are included in the location information, have been added. With the transmission of the join message, a multicast IP stream from the multicast server is transmitted to the receiving terminal 200 via an edge filter.

In the receiving terminal 200, filtering is performed with the packet identifier (packet_id) included in the location information to obtain a target asset (component) from the multicast IP stream. When leaving the receive status, the receiving terminal 200 transmits, to the edge router, a leave message (LEAVE message) to which the multicast address and the port number have been added.

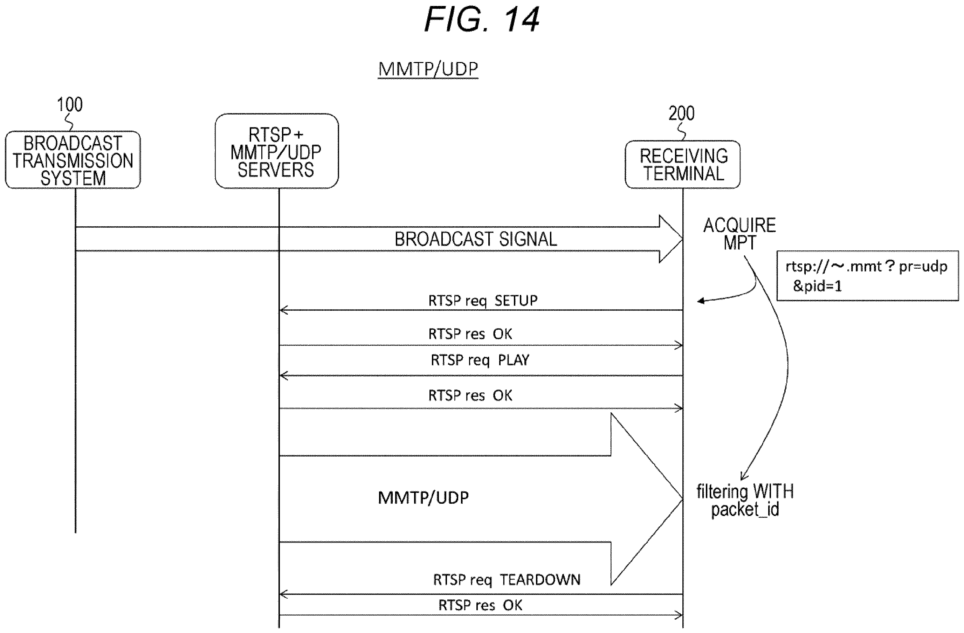

Next, a case of receiving an asset distributed through the protocol of (B) MMTP/UDP distribution is described with reference to Fig. 14. In the case of MMTP/UDP distribution, a protocol of the real time streaming protocol (RTSP) is used. In the case of MMTP/UDP distribution, an RTSP server and an MMTP/UDP server are present. These servers are present as separate devices or the same device. The illustrated example illustrates the case where the servers are present as the same device.

The receiving terminal 200 receives a broadcast signal, and acquires an MP table (MPT). The receiving terminal 200 obtains, from the MP table, location information of the asset distributed through the protocol of MMTP/UDP distribution. The location information in this case is a URL. "rtsp: // ∼.mmt" is specified as a schema. Furthermore, a parameter that specifies UDP and a parameter that specifies a packet identifier are added by a query field. In this case, the receiving terminal 200 can identify it as MMTP/UDP distribution from "rtsp" and "pr=udp."

The receiving terminal 200 transmits an RTSP request of "SETUP." At this point in time, the receiving terminal 200 inserts the location information into an RTSP header. In this case, as the location information, all pieces of the location information acquired from the MP table are inserted, or the location information is inserted excluding the parameter that specifies the packet identifier. The RTSP request is transmitted to a target server. The server transmits an "OK" response.

Thereafter, the receiving terminal 200 subsequently transmits an RTSP request of "PLAY." In response to this, the target server transmits an "OK" response. At the same time, the MMTP/UDP server transmits a transport stream to the receiving terminal 200. In the receiving terminal 200, filtering is performed with the packet identifier (packet_id) included in the location information to obtain a target asset (component) from the stream. When leaving the receive status, the receiving terminal 200 transmits an RTSP request of "TEARDOWN. " In response to this, the server transmits an "OK" response.

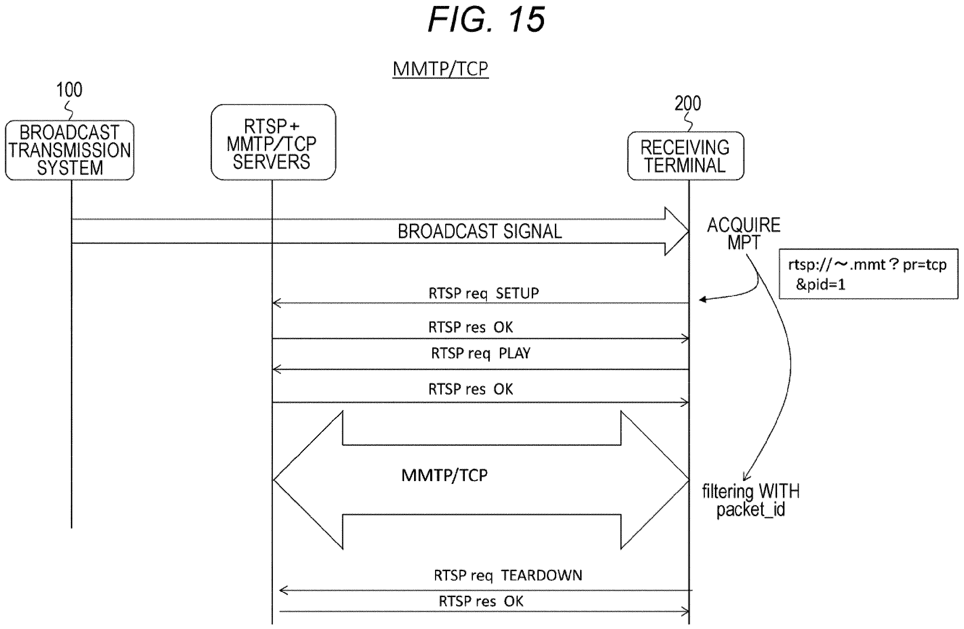

Next, a case of receiving an asset distributed through the protocol of (C) MMTP/TCP distribution is described with reference to Fig. 15. Also in the case of MMTP/TCP distribution, the protocol of the real time streaming protocol (RTSP) is used. In the case of MMTP/TCP distribution, an RTSP server and an MMTP/TCP server are present. These servers are present as separate devices or the same device. The illustrated example illustrates the case where the servers are present as the same device.

The receiving terminal 200 receives a broadcast signal, and acquires an MP table (MPT). The receiving terminal 200 obtains, from the MP table, location information of the asset distributed through the protocol of MMTP/TCP distribution. The location information in this case is a URL. "rtsp: // ∼.mmt" is specified as a schema. Furthermore, a parameter that specifies TCP and a parameter that specifies a packet identifier are added by a query field. In this case, the receiving terminal 200 can identify it as MMTP/TCP distribution from "rtsp" and "pr=tcp."

The receiving terminal 200 transmits an RTSP request of "SETUP." At this point in time, the receiving terminal 200 inserts the location information into an RTSP header. In this case, as the location information, all pieces of the location information acquired from the MP table are inserted, or the location information is inserted excluding the parameter that specifies the packet identifier. The RTSP request is transmitted to a target server. The server transmits an "OK" response.

Thereafter, the receiving terminal 200 subsequently transmits an RTSP request of "PLAY." In response to this, the target server transmits an "OK" response. At the same time, the MMTP/TCP server transmits a transport stream to the receiving terminal 200. In the receiving terminal 200, filtering is performed with the packet identifier (packet_id) included in the location information to obtain a target asset (component) from the stream. When leaving the receive status, the receiving terminal 200 transmits an RTSP request of "TEARDOWN. " In response to this, the server transmits an "OK" response.

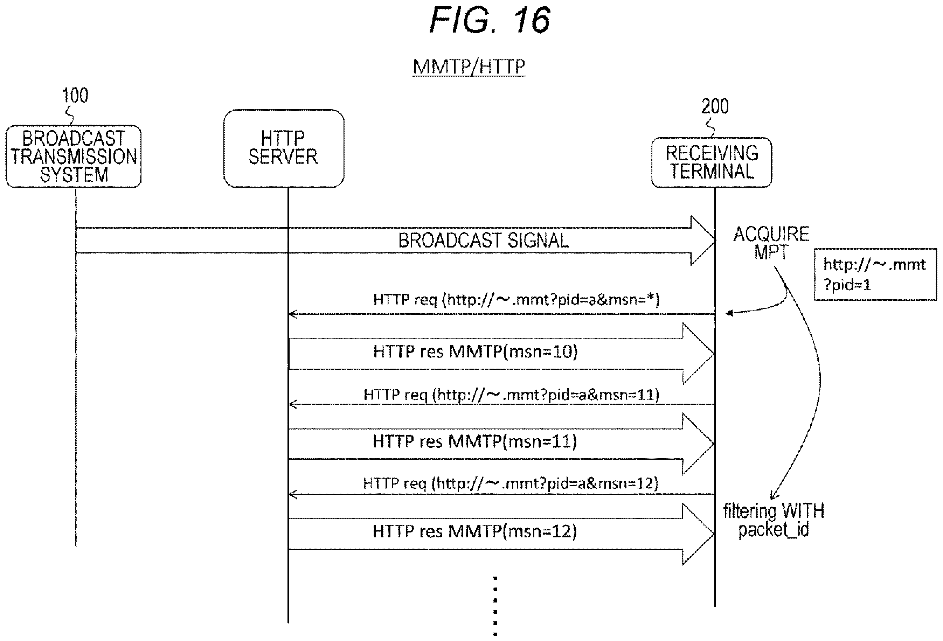

Next, a case of receiving an asset distributed through the protocol of (D) MMTP/HTTP distribution is described with reference to Fig. 16. In the case of MMTP/HTTP distribution, the protocol of the hyper text transfer protocol (HTTP) is used. In the case of MMTP/HTTP distribution, an HTTP server is present.

The receiving terminal 200 receives a broadcast signal, and acquires an MP table (MPT). The receiving terminal 200 obtains, from the MP table, location information of the asset distributed through the protocol of MMTP/HTTP distribution. The location information in this case is a URL. "http: // ∼.mmt" is specified as a schema. Furthermore, a parameter that specifies a packet identifier (packet_id) is added by a query field. The receiving terminal 200 can identify it as MMTP/HTTP distribution from "http" and "mmt."

The receiving terminal 200 transmits an HTTP request to the HTTP server. At this point in time, the receiving terminal 200 inserts the location information into an HTTP header. In this case, as the location information, "http:// ∼.mmt" included in the location information acquired from the MP table is inserted. Furthermore, a parameter "pid=a" that specifies the packet identifier, and a parameter "msn=*" that specifies an MPU sequence number are added by a query field. The parameter "msn=*" is a specification to "send an MPU having an MPU sequence number at that timing."

The HTTP request is transmitted to a target HTTP server. The HTTP server transmits, to the receiving terminal 200, an MMTP stream including an MPU with an MPU sequence number (= 10) at the timing when the HTTP request was transmitted, as an HTTP response. In the receiving terminal 200, filtering is performed with the packet identifier (packet_id) included in the location information to obtain a target asset (component) from the MMTP stream.

The receiving terminal 200 transmits an HTTP request that requests an MPU with the next MPU sequence number (= 11) to the HTTP server before or after the completion of the receipt of the MMTP stream. The HTTP server then transmits, to the receiving terminal 200, an MMTP stream including the MPU with the next MPU sequence number (= 11) as an HTTP response. The receiving terminal 200 performs filtering with the packet identifier (packet_id) included in the location information and accordingly can obtain a target asset (component) from the MMTP stream.

Similarly, the receiving terminal 200 subsequently transmits, to the HTTP server, an HTTP request that requests an MPU with the next MPU sequence number, receives, from the HTTP server, an MMTP stream including the MPU with the next MPU sequence number as an HTTP response, and obtains a target asset (component) from the MMTP stream.

Incidentally, at the time of the HTTP request, the parameter "pid=a" included in the HTTP header specifies the type of the asset, for example, video or audio. Video and audio may be multiplexed into the MMTP stream. In this case, in terms of the MPU sequence number, video has a video MPU sequence number, and audio has an audio MPU sequence number. Even if an MPU sequence number is specified, which asset (component) the MPU sequence number belongs to is unknown without the parameter "pid=a."

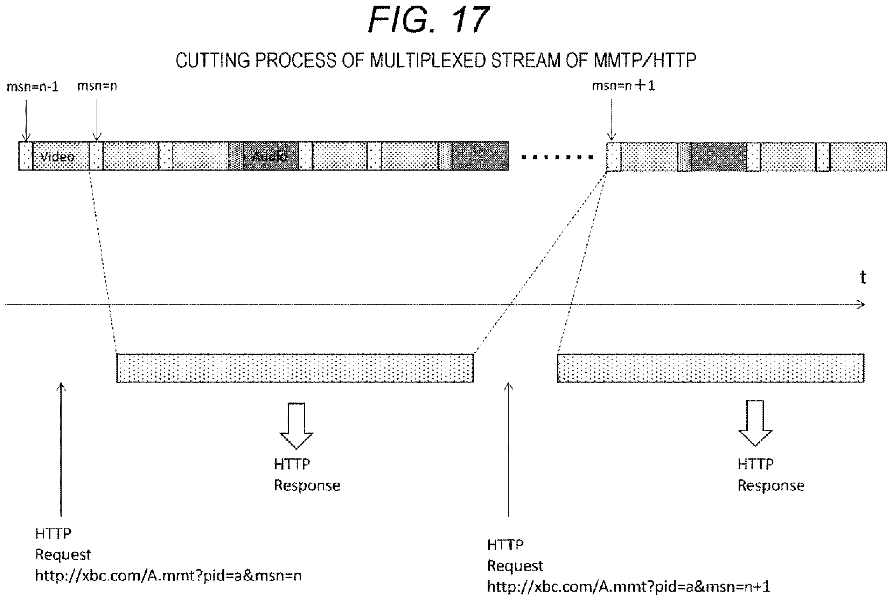

Fig. 17 illustrates a cutting process in a multiplexed stream of MMTP/HTTP. The parameter "pid=a" indicates video. The HTTP server, which has received an HTTP request that requests an MPU with an MPU sequence number n, cuts out from the switching of the video MPU sequence number from n - 1 to n to from n to n + 1, from the multiplexed stream, and transmits the cutting to the receiving terminal 200.

Incidentally, in this case, audio may also be desired to be obtained from the same multiplexed stream. In this case, the receiving terminal 200 can recognize, from the location information, that the audio and video are multiplexed. The receiving terminal 200 performs a process of retrieving target audio from the MMTP stream cut out with the video MPU sequence number by filtering with the packet identifier (packet_id) included in the location information.

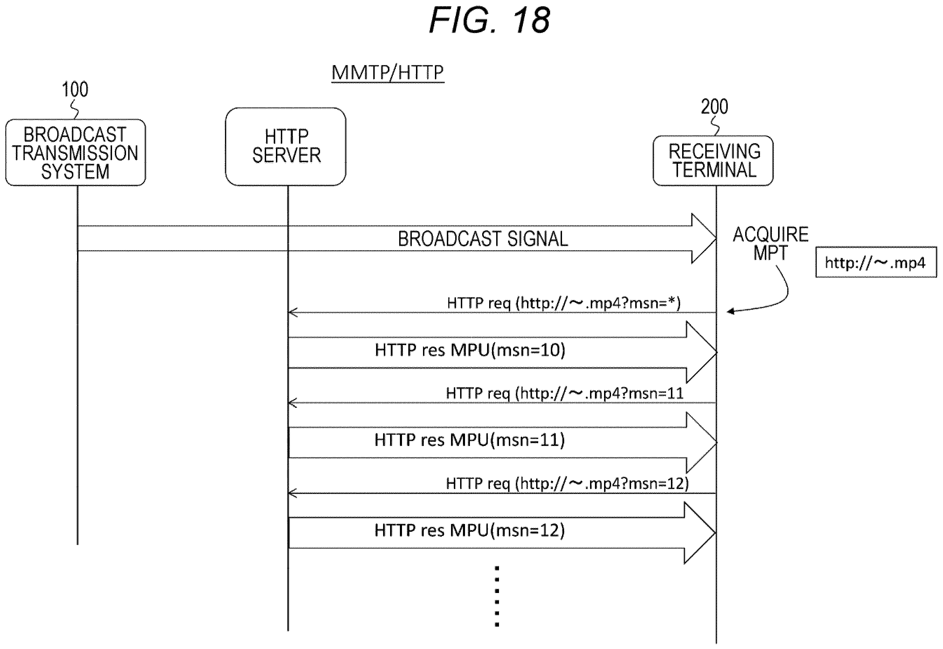

Next, a case of receiving an asset distributed through the protocol of (E) MPU/HTTP distribution is described with reference to Fig. 18. In the case of MPU/HTTP distribution, the protocol of the hyper text transfer protocol (HTTP) is used. In the case of MPU/HTTP distribution, an HTTP server is present.

The receiving terminal 200 receives a broadcast signal, and acquires an MP table (MPT). The receiving terminal 200 obtains, from the MP table, location information of the asset distributed through the protocol of MPU/HTTP distribution. The location information in this case is a URL. "http: // ∼.mp4" is specified as a schema. The receiving terminal 200 can identify it as MPU/HTTP distribution from "http" and "mp4."

The receiving terminal 200 transmits an HTTP request to the HTTP server. At this point in time, the receiving terminal 200 inserts the location information into an HTTP header. In this case, as the location information, "http:// ∼.mp4" included in the location information acquired from the MP table is inserted. Furthermore, the parameter "msn=*" that specifies an MPU sequence number is added by a query field. The parameter "msn=*" is a specification to "send an MPU at the timing."

The HTTP request is transmitted to a target HTTP server. The HTTP server transmits the MPU with the MPU sequence number (= 10) at the timing when the HTTP request was transmitted, as an HTTP response, to the receiving terminal 200.

The receiving terminal 200 transmits an HTTP request that requests the MPU with the next MPU sequence number (= 11) to the HTTP server before or after the completion of the receipt of the MPU. The HTTP server transmits the MPU with the next MPU sequence number (= 11) as an HTTP response to the receiving terminal 200.

Similarly, the receiving terminal 200 subsequently transmits, to the HTTP server, an HTTP request that requests an MPU with the next MPU sequence number, and receives, from the HTTP server, the MPU with the next MPU sequence number as an HTTP response.

### [Configuration of the Broadcast Transmission System]

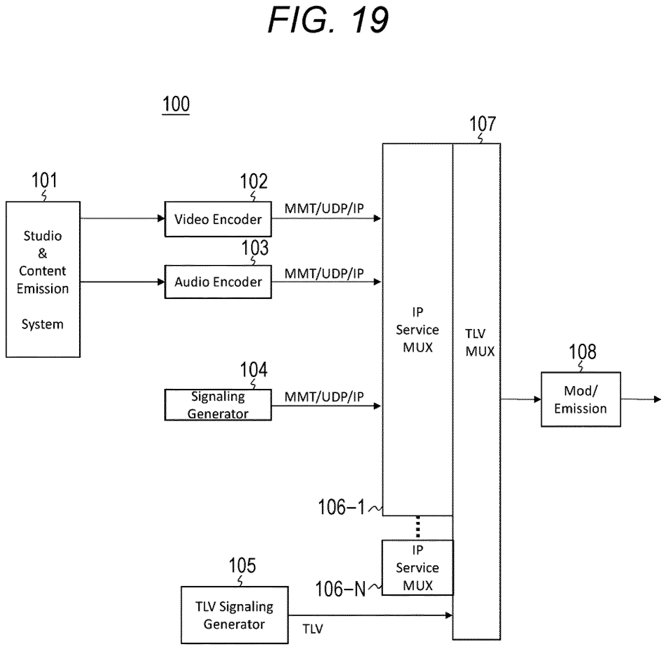

Fig. 19 illustrates a configuration example of the broadcast transmission system 100. The broadcast transmission system 100 includes a signal transmission unit 101, a video encoder 102, an audio encoder 103, and a signaling generator 104. Moreover, the broadcast transmission system 100 includes a TLV signaling generator 105, N IP service multiplexers 106-1 to 106-N, a TLV multiplexer 107, and a modulation/transmission unit 108.

The signal transmission unit 101 is, for example, a studio of a TV station, or a recording/reproducing apparatus such as a VTR, and transmits video and audio stream data to the encoders. The video encoder 102 encodes the video data transmitted from the signal transmission unit 101, further packetizes it, and transmits an IP packet including a video MMT packet to the IP service multiplexer 106-1. The audio encoder 103 encodes the audio data transmitted from the signal transmission unit 101, further packetizes it, and transmits an IP packet including an audio MMT packet to the IP service multiplexer 106-1.

The signaling generator 104 generates a signaling message and transmits an IP packet including an MMT packet where the signaling message is placed in the payload portion to the IP service multiplexer 106-1. In this case, the signaling generator 104 places an MP table (MPT) in a PAmessage (see Figs. 11 and 12). The MP table includes information on all assets (components) transmitted in broadcasting and communication as described above. The information also includes location information of each asset.

The IP service multiplexer 106-1 performs time-division multiplexing on an IP packet transmitted from each encoder. At this point in time, the IP service multiplexer 106-1 adds a TLV header to each IP packet to form a TLV packet. The IP service multiplexer 106-1 configures one channel portion within one transponder. The IP service multiplexers 106-2 to 106-N have a similar function to the IP service multiplexer 106-1, and configures other channel portions within the one transponder.

The TLV signaling generator 105 generates signaling (signaling) information and generates a TLV packet where the signaling (signaling) information is placed in the payload portion. The TLV multiplexer 107 multiplexes the TLV packets generated by the IP service multiplexers 106-1 to 106-N and the TLV signaling generator 105 to generate a broadcast stream. The modulation/transmission unit 108 performs an RFmodulation process on the broadcast stream generated by the TLV multiplexer 107 to transmit it to an RF transmission path.

The operation of the broadcast transmission system 100 illustrated in Fig. 19 is briefly described. The video data transmitted from the signal transmission unit 101 is supplied to the video encoder 102. In the video encoder 102, the video data is encoded, and further packetized; accordingly, an IP packet including a video MMT packet is generated. The IP packet is transmitted to the IP service multiplexer 106-1. Moreover, a similar process is also performed on the audio data transmitted from the signal transmission unit 101. An IP packet including an audio MMT packet generated by the audio encoder 103 is then transmitted to the IP service multiplexer 106-1.

Moreover, in the signaling generator 104, a signaling message is generated. An IP packet including an MMT packet where the signaling message is placed in the payload portion is generated. The IP packet is transmitted to the IP service multiplexer 106-1. At this point in time, an MP table (MPT) is placed in a PA message.

In the IP service multiplexer 106-1, time-division multiplexing is performed on the IP packets transmitted from the encoders and the signaling generator 104. At this point in time, a TLV header is added to each IP packet to form a TLV packet. In the IP service multiplexer 106-1, one channel portion within one transponder is processed. In the IP service multiplexers 106-2 to 106-N, the other channel portions within the one transponder are similarly processed

The TLV packets obtained by the IP service multiplexers 106-1 to 106-N are transmitted to the TLV multiplexer 107. Furthermore, the TLV packet where the signaling (signaling) information is placed in the payload portion is also transmitted from the TLV signaling generator 105 to the TLV multiplexer 107.

In the TLV multiplexer 107, the TLV packets generated by the IP service multiplexers 106-1 to 106-N and the TLV signaling generator 105 are multiplexed to generate a broadcast stream. The broadcast stream is transmitted to the modulation/transmission unit 108. In the modulation/transmission unit 108, the RF modulation process is performed on the broadcast stream. The RF modulated signal is transmitted as a broadcast signal to the RF transmission path.

### [Configuration of the Receiving Terminal]

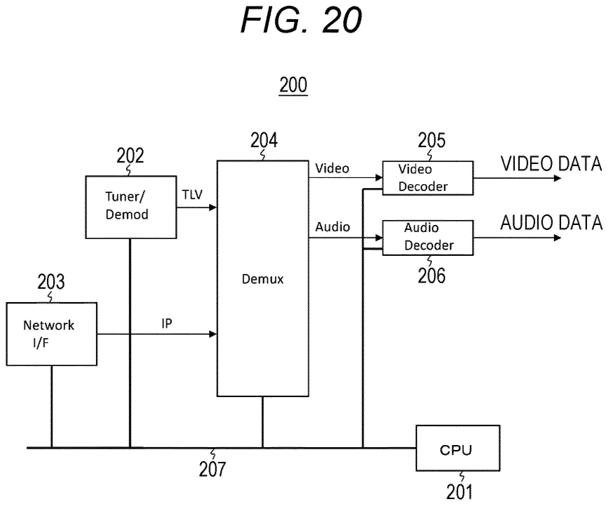

Fig. 20 illustrates a configuration example of the receiving terminal 200. The receiving terminal 200 includes a CPU 201, a tuner/demodulator 202, a network interface unit 203, and a demultiplexer 204. Moreover, the receiving terminal 200 includes a video decoder 205 and an audio decoder 206.

The CPU 201 configures a control unit, and controls the operation of each unit of the receiving terminal 200. The tuner/demodulator 202 receives the RF modulated signal, performs a demodulation process, and obtains the broadcast stream. The network interface unit 203 receives a transport stream of a service distributed from the distribution server 300 via the communication network 400.

The demultiplexer 204 performs a demultiplexing process and a depecketizing process on the broadcast stream obtained by the tuner/demodulator 202 and the transport stream obtained by the network interface unit 203 to output the signaling information, and the encoded video and audio data.

The video decoder 205 decodes the encoded video data obtained by the demultiplexer 204 to obtain baseband video data. The audio decoder 206 decodes the encoded audio data obtained by the demultiplexer 204 to obtain baseband audio data.

The operation of the receiving terminal 200 illustrated in Fig. 20 is briefly described. The tuner/demodulator 202 receives the RF modulated signal transmitted along the RF transmission path, performs a demodulation process, and obtains the broadcast stream. The broadcast stream is transmitted to the demultiplexer 204. Moreover, the network interface unit 203 receives the transport stream of the service distributed from the distribution server 300 via the communication network 400 and transmits the transport stream to the demultiplexer 204.

The demultiplexer 204 performs the demultiplexing process and the depacketizing process on the broadcast stream from the tuner/demodulator 202 and the transport stream from the network interface unit 203 to extract the signaling information, the encoded video and audio data, and the like.

Various types of signaling information extracted in the demultiplexer 204 are transmitted to the CPU 201 via a CPU bus207. The signaling information includes TLV-SI andMMT-SI. As described above, TLV-SI is a transmission control signal (TLV-NIT/AMT) on the TLV transmission packet. MMT-SI is a signaling message as the signaling information included in the payload portion of the MMT packet (see Fig. 2). The CPU 201 controls the operation of each unit of the receiving terminal 200 on the basis of the signaling information.

The encoded video data extracted by the demultiplexer 204 is transmitted to the video decoder 205 for decoding to obtain baseband video data. Moreover, the encoded audio data extracted by the demultiplexer 204 is transmitted to the audio decoder 206 for decoding to obtain baseband audio data for audio output.

As described above, in the hybrid broadcasting and communication system 10 illustrated in Fig. 1, acquisition information of an asset (component) on a communication path, the acquisition information including at least location information and protocol identification information, is inserted into an MP table. Hence, the receiving side can excellently receive a transport stream including a transmission packet having the component on the communication path, on the basis of the acquisition information.

Moreover, in the hybrid broadcasting and communication system 10 illustrated in Fig. 1, the acquisition information of the asset (component) on the communication path, which is inserted in the MP table, includes packet identification information. Hence, even in a case where a plurality of transmission packets of assets is multiplexed into an MMTP stream, the receiving side can selectively acquire a desired transmission packet.

### <2. Modifications>

Incidentally, in the above-mentioned embodiment, the example where a transmission packet is an MMT packet is illustrated. The present technology is not limited to this. Also if other similar transmission packets are handled, the present technology can be naturally applied.

Moreover, the present technology can also employ the following configurations:
(1) A transmission apparatus including:
   a transport stream generation unit configured to generate a transport stream obtained by time-division multiplexing a first transmission packet including a predetermined component and a second transmission packet including information on the predetermined component;
   a transmission unit configured to transmit the transport stream along a predetermined transmission path; and
   an information insertion unit configured to insert, into the second transmission packet, acquisition information of a component on a communication path, the acquisition information including at least location information and protocol identification information.
(2) The transmission apparatus according to (1), wherein the acquisition information further includes packet identification information.
(3) The transmission apparatus according to (1) or (2), wherein the protocol identification information is information for identifying a protocol of at least any of multicast distribution, MMTP/UDP distribution, MMTP/TCP distribution, MMTP/HTTP distribution, and MPU/HTTP distribution.
(4) The transmission apparatus according to (3), wherein upon the protocol identification information indicating the MMTP/UDP distribution, the acquisition information includes a parameter that specifies UDP in addition to a URL.
(5) The transmission apparatus according to (3), wherein upon the protocol identification information indicating the MMTP/TCP distribution, the acquisition information includes a parameter that specifies TCP in addition to a URL.
(6) The transmission apparatus according to any of (1) to (5), wherein the transmission packet is an MMT packet.
(7) The transmission apparatus according to any of (1) to (6), wherein the predetermined transmission path is a broadcast transmission path.
(8) A transmission method including:
   a transport stream generation step of generating a transport stream obtained by time-division multiplexing a first transmission packet including a predetermined component and a second transmission packet including information on the predetermined component;
   a transmission step of a transmission unit transmitting the transport stream along a predetermined transmission path; and
   an information insertion step of inserting, into the second transmission packet, acquisition information of a component on a communication path, the acquisition information including at least location information and protocol identification information.
(9) A receiving apparatus including:
   a receiving unit configured to receive, along a predetermined transmission path, a transport stream obtained by time-division multiplexing a first transmission packet including a predetermined component and a second transmission packet including information on the predetermined component,
   the second transmission packet including inserted acquisition information of a component on a communication path, the acquisition information including at least location information and protocol identification information; and
   a communication unit configured to make a request to a server on the basis of the location information and the protocol identification information to receive a transport stream including a third transmission packet having a predetermined component from the server via a network through a protocol indicated by the protocol identification information.
(10) The receiving apparatus according to (9),
   wherein the acquisition information of the component on the communication path further includes packet identification information, and
   the communication unit extracts the third transmission packet from the received transport stream including the third transmission packet on the basis of the packet identification information.
(11) The receiving apparatus according to (9) or (10), wherein the protocol identification information is information for identifying a protocol of at least any of multicast distribution, MMTP/UDP distribution, MMTP/TCP distribution, MMTP/HTTP distribution, and MPU/HTTP distribution.
(12) The receiving apparatus according to (11), wherein upon the protocol identification information indicating the MMTP/UDP distribution,
   the acquisition information includes a parameter that specifies UDP in addition to a URL, and
   the communication unit makes a request to a server using the URL and the parameter that specifies UDP to receive the transport stream including the third transmission packet from the server via the network through the protocol of the MMTP/UDP distribution.
(13) The receiving apparatus according to (11), wherein upon the protocol identification information indicating the MMTP/TCP distribution,
   the acquisition information includes a parameter that specifies TCP in addition to a URL, and
   the communication unit makes a request to a server using the URL and the parameter that specifies TCP to receive the transport stream including the third transmission packet from the server via the network through the protocol of the MMTP/TCP distribution.
(14) The receiving apparatus according to (11), wherein upon the protocol identification information indicating the MMTP/HTTP distribution,
   the acquisition information includes a URL,
   the communication unit sequentially transmits requests to the server using the URL and a parameter indicating an MPU sequence number to sequentially receive MMT packets including an MPU with an MPU sequence number corresponding to the parameter from the server via the network, and
   the parameter indicating an MPU sequence number in the first request is assumed to represent an MPU sequence number at a timing of the first request.
(15) The receiving apparatus according to (11), wherein upon the protocol identification information indicating the MPU/HTTP distribution,
   the acquisition information includes a URL, and
   the communication unit sequentially transmits requests to the server using the URL and a parameter indicating an MPU sequence number to sequentially receive MPUs with MPU sequence number corresponding to the parameter from the server via the network, and
   the parameter indicating an MPU sequence number in the first request is assumed to represent an MPU sequence number at a timing of the first request.
(16) The receiving apparatus according to any of (9) to (15), wherein the transmission packet is an MMT packet.
(17) The receiving apparatus according to any of (9) to (16), wherein the predetermined transmission path is a broadcast transmission path.
(18) A receiving method including:
   a receiving step of a receiving unit receiving, along a predetermined transmission path, a transport stream obtained by time-division multiplexing a first transmission packet including a predetermined component and a second transmission packet including information on the predetermined component,
   the second transmission packet including inserted acquisition information of a component on a communication path, the acquisition information including at least location information and protocol identification information; and
   a communication step of a communication unit receiving a transport stream including a third transmission packet having a predetermined component via a network through a protocol indicated by the protocol identification information on the basis of the location information and the protocol identification information.
(19) A receiving apparatus including:
   a receiving unit configured to receive, along a predetermined transmission path, a transport stream obtained by time-division multiplexing a first transmission packet including a predetermined component and a second transmission packet including information on the predetermined component, the second transmission packet including inserted acquisition information of a component on a communication path, the acquisition information including at least location information and protocol identification information; and
   a processing unit configured to process the transport stream received by the receiving unit.

### REFERENCE SIGNS LIST

10 Hybrid broadcasting and communication system
100 Broadcast transmission system
101 Signal transmission unit
102 Video encoder
103 Audio encoder
104 Signaling generator
105 TLV signaling generator
106-1 to 106-N IP service multiplexer
107 TLV multiplexer
108 Modulation/transmission unit
200 Receiving terminal
201 CPU
202 Tuner/demodulator
203 Network interface unit
204 Demultiplexer
205 Video decoder
206 Audio decoder
207 CPU bus
300 Distribution server
400 Communication network

## Claims

1. A transmission apparatus comprising:
a transport stream generation unit configured to generate a transport stream obtained by time-division multiplexing a first transmission packet including a predetermined component and a second transmission packet including information on the predetermined component;
a transmission unit configured to transmit the transport stream along a predetermined transmission path; and
an information insertion unit configured to insert, into the second transmission packet, acquisition information of a component on a communication path, the acquisition information including at least location information and protocol identification information.

2. The transmission apparatus according to claim 1, wherein the acquisition information further includes packet identification information.

3. The transmission apparatus according to claim 1, wherein the protocol identification information is information for identifying a protocol of at least any of multicast distribution, MMTP/UDP distribution, MMTP/TCP distribution, MMTP/HTTP distribution, and MPU/HTTP distribution.

4. The transmission apparatus according to claim 3, wherein upon the protocol identification information indicating the MMTP/UDP distribution, the acquisition information includes a parameter that specifies UDP in addition to a URL.

5. The transmission apparatus according to claim 3, wherein upon the protocol identification information indicating the MMTP/TCP distribution, the acquisition information includes a parameter that specifies TCP in addition to a URL.

6. The transmission apparatus according to claim 1, wherein the transmission packet is an MMT packet.

7. The transmission apparatus according to claim 1, wherein the predetermined transmission path is a broadcast transmission path.

8. A transmission method comprising:
a transport stream generation step of generating a transport stream obtained by time-division multiplexing a first transmission packet including a predetermined component and a second transmission packet including information on the predetermined component;
a transmission step of a transmission unit transmitting the transport stream along a predetermined transmission path; and
an information insertion step of inserting, into the second transmission packet, acquisition information of a component on a communication path, the acquisition information including at least location information and protocol identification information.

9. A receiving apparatus comprising:
a receiving unit configured to receive, along a predetermined transmission path, a transport stream obtained by time-division multiplexing a first transmission packet including a predetermined component and a second transmission packet including information on the predetermined component,
the second transmission packet including inserted acquisition information of a component on a communication path, the acquisition information including at least location information and protocol identification information; and
a communication unit configured to make a request to a server on the basis of the location information and the protocol identification information to receive a transport stream including a third transmission packet having a predetermined component from the server via a network through a protocol indicated by the protocol identification information.

10. The receiving apparatus according to claim 9,
wherein the acquisition information of the component on the communication path further includes packet identification information, and
the communication unit extracts the third transmission packet from the received transport stream including the third transmission packet on the basis of the packet identification information.

11. The receiving apparatus according to claim 9, wherein the protocol identification information is information for identifying a protocol of at least any of multicast distribution, MMTP/UDP distribution, MMTP/TCP distribution, MMTP/HTTP distribution, and MPU/HTTP distribution.

12. The receiving apparatus according to claim 11, wherein upon the protocol identification information indicating the MMTP/UDP distribution,
the acquisition information includes a parameter that specifies UDP in addition to a URL, and
the communication unit makes a request to a server using the URL and the parameter that specifies UDP to receive the transport stream including the third transmission packet from the server via the network through the protocol of the MMTP/UDP distribution.

13. The receiving apparatus according to claim 11, wherein upon the protocol identification information indicating the MMTP/TCP distribution,
the acquisition information includes a parameter that specifies TCP in addition to a URL, and
the communication unit makes a request to a server using the URL and the parameter that specifies TCP to receive the transport stream including the third transmission packet from the server via the network through the protocol of the MMTP/TCP distribution.

14. The receiving apparatus according to claim 11, wherein upon the protocol identification information indicating the MMTP/HTTP distribution,
the acquisition information includes a URL,
the communication unit sequentially transmits requests to the server using the URL and a parameter indicating an MPU sequence number to sequentially receive MMT packets including an MPU with an MPU sequence number corresponding to the parameter from the server via the network, and
the parameter indicating an MPU sequence number in the first request is assumed to represent an MPU sequence number at a timing of the first request.

15. The receiving apparatus according to claim 11, wherein upon the protocol identification information indicating the MPU/HTTP distribution,
the acquisition information includes a URL, and
the communication unit sequentially transmits requests to the server using the URL and a parameter indicating an MPU sequence number to sequentially receive MPUs with MPU sequence number corresponding to the parameter from the server via the network, and
the parameter indicating an MPU sequence number in the first request is assumed to represent an MPU sequence number at a timing of the first request.

16. The receiving apparatus according to claim 9, wherein the transmission packet is an MMT packet.

17. The receiving apparatus according to claim 9, wherein the predetermined transmission path is a broadcast transmission path.

18. A receiving method comprising:
a receiving step of a receiving unit receiving, along a predetermined transmission path, a transport stream obtained by time-division multiplexing a first transmission packet including a predetermined component and a second transmission packet including information on the predetermined component,
the second transmission packet including inserted acquisition information of a component on a communication path, the acquisition information including at least location information and protocol identification information; and
a communication step of a communication unit receiving a transport stream including a third transmission packet having a predetermined component via a network through a protocol indicated by the protocol identification information on the basis of the location information and the protocol identification information.

19. A receiving apparatus comprising:
a receiving unit configured to receive, along a predetermined transmission path, a transport stream obtained by time-division multiplexing a first transmission packet including a predetermined component and a second transmission packet including information on the predetermined component,
the second transmission packet including inserted acquisition information of a component on a communication path, the acquisition information including at least location information and protocol identification information; and
a processing unit configured to process the transport stream received by the receiving unit.
